# EUROPÄISCHE PATENTSCHRIFT

(11) **EP 0 697 267 B1**
(45) Veröffentlichungstag und Bekanntmachung des Hinweises auf die Patenterteilung: **26.11.1997**
(21) Anmeldenummer: 95810498.6
(22) Anmeldetag: 07.08.1995
(51) Int. Cl.: B23Q 16/08

(54) **Befestigungsvorrichtung für ein Werkzeug oder Werkstück**
Mounting device for a tool or a workpiece
Dispositif de fixation pour un outil ou une pièce

(30) Priorität: 10.08.1994 DE 4428310
(43) Veröffentlichungstag der Anmeldung: 21.02.1996
(73) Patentinhaber: Schanz, Manfred, D-79650 Schopfheim (DE)
(72) Erfinder: Schanz, Manfred, D-79650 Schopfheim (DE)
(74) Vertreter: Rottmann, Maximilian R.

(56) Entgegenhaltungen:
- EP-A- 0 255 042
- EP-A- 0 267 352
- WO-A-88/10172
- DE-A- 2 402 218
- DE-A- 3 743 894
- DE-A- 3 902 854
- FR-A- 2 321 622
- GB-A- 1 094 067
- US-A- 4 512 068

## Beschreibung

Die vorliegende Erfindung betrifft eine Befestigungsvorrichtung für ein Werkzeug oder Werkstück nach dem Oberbegriff des Patentanspruchs 1.

Derartige Befestigungsvorrichtungen sind bekannt und dienen zum Beispiel zu einer passgenauen Justierung eines Elektrodenhalters bzw. einer Elektrode an einem Spannfutter.

Aus der EP-0 111 092 B2 ist eine derartige Befestigungsvorrichtung bekannt, bei welcher für die Zentrierung in X- und Y-Richtung ein zwischen den beiden aneinander zu befestigenden Teilen angeordnetes Blech mit Aussparungen vorgesehen ist, wobei die Ränder der Aussparungen des Bleches den Zentriervorsprüngen des einen Teiles gegenüber nachgeben, bis die beiden Teile sich an den vorgesehenen Passflächen berühren, um auch eine Ausrichtung und Justierung in der Z-Achse, also der Längsmittelachse der gesamten Anordnung, herbeizuführen. Dabei ist also das erwähnte Zwischenblech erforderlich, damit nämlich in den drei verschiedenen genannten Richtungen jeweils die passgenaue Berührung, Justierung und Ausrichtung erzielt wird, welches Zwischenblech aber den Herstellungs- und Montageaufwand sowie auch die Bauhöhe der gesamten Anordnung vergrössert.

Aus der GB-A-1 094 067 ist ein zweiteiliger Revolverkopf einer Drehmaschine bekannt, der ein integrierendes, nicht auswechselbares Bauteil der Drehmaschine darstellt. Der eine, hintere Teil des Revolverkopfs ist drehfest angeordnet, währenddem der andere, vordere Teil drehbar ausgebildet ist. Die primäre Aufgabe dieses Revolverkopfs besteht darin, Bearbeitungswerkzeuge -namentlich Drehstähle- derart aufzunehmen, dass diese durch Verdrehen des Revolverkopfs in die gewünschte, radiale Arbeitsposition gebracht werden können. Zur Arretierung in der gewünschten Position weist der Revolverkopf zwei als Zwischenscheiben ausgebildete Zentrierelemente auf. Die eine, mit Nocken versehene Zwischenscheibe ist am hinteren, drehfesten Teil des Revolverkopfs angebracht, währenddem die andere, mit korrespondierenden Nuten versehene Zwischenscheibe am vorderen, drehbaren Teil des Revolverkopfs angebracht ist. Die Anforderungen, die an einen derartigen Revolverkopf gestellt werden, sind in erster Linie grosse Stabilität und Spielfreiheit. An die Genauigkeit, gar an die Wiederholgenauigkeit, werden keine besonderen Anforderungen gestellt. Zudem ist zu berücksichtigen, dass die Nocken nicht einstückig an der Zwischenscheibe angeformt sind, sondern separat gefertigt und nachträglich an der Zwischenscheibe angebracht werden.

Die EP-A-0 267 352 zeigt eine Vorrichtung zur wiederholbaren Verbindung zweier Gegenstände, die zwei Kupplungsteile aufweist. Die Kupplungsfläche des einen Kupplungsteils ist mit starren Profilstücken versehen. Diese sind zwecks Kraftübertragung ohne Relativbewegung der beiden Kupplungsteile mit Hilfe einer entsprechenden Anzahl passender und elastisch teilweise verformbarer Übertragungselemente mit der Kupplungsfläche des anderen Kupplungsteils in Eingriff bringbar.

Der Erfindung liegt die Aufgabe zugrunde, eine Befestigungsvorrichtung der im Oberbegriff des Patentanspruchs 1 genannten Art zu schaffen, mit welcher eine präzise Zentrierung oder Justierung sowohl in X- als auch in Y-Richtung bei gleichzeitig passgenauer gegenseitiger Anlage in Z-Richtung ermöglicht wird, ohne dass zusätzlich ein Zwischenblech hergestellt und passgenau angebracht werden muss. Auch irgend ein anderes zusätzliches Hilfsteil zur passgenauen Berührung bei gleichzeitiger Zentrierung oder Justierung soll vermieden werden. Dennoch sollen in Gebrauchsstellung die Passflächen fest und ohne eine Gefahr des Verkippens der beiden aneinander zu befestigenden Teile aneinander liegen und gleichzeitig in X- und Y-Richtung zentriert oder justiert sein, das heisst, die Passvorsprünge sollen vollständig im Eingriff sein können, wenn die Berührflächen aneinander liegen, sollen aber die endgültige Berührung dieser Passflächen nicht verhindern.

Die Lösung dieser scheinbar widersprüchlichen Aufgabe besteht darin, dass die Passvorsprünge einstückig an einem der Teile zwischen den Berührflächen angeformt sind, währenddem direkt in das damit zu verbindende andere Teil an entsprechenden Stellen Passaussparungen eingelassen sind, die beim gegenseitigen Befestigen passgenau formschlüssig ineinandergreifen, und dass die Passvorsprünge an einem in axialer Richtung gegen eine Verformungskraft elastisch auslenkbaren oder nachgiebigen Bereich des sie aufweisenden Teiles vorgesehen sind.

Werden die derart gestalteten Teile aneinander befestigt und miteinander verspannt, greifen die Passvorsprünge in die Passaussparungen ein, bevor die Berührflächen aneinander liegen. Durch Erhöhen der axialen Spann- oder Befestigungskraft kann dennoch ohne irgend ein Zwischenblech oder dergleichen erreicht werden, dass sich die Berührflächen in erwünschter Weise aneinander anlegen, also auch Schrägstellungen der beiden Teile gegeneinander verhindert werden, weil die die Zentrierung oder Justierung in X- und Y-Richtung bewirkenden Passvorsprünge beziehungsweise die diese tragenden Bereiche etwas in Spannrichtung nachgeben. Somit können die zu verbindenden Teile aufgrund der auslenkbaren oder nachgiebigen Bereiche bei den Passvorsprüngen eine feste Anlage der Berührflächen ermöglichen, wenn die Passvorsprünge und Passaussparungen formschlüssig in ihrer Endstellung ineinandergreifen, ohne dass irgendwelche zusätzlichen Teile benötigt werden.

Nachstehend sind Ausführungsbeispiele der Erfindung anhand der Zeichnung mit den erfindungswesentlichen Merkmalen näher beschrieben. Es zeigt in zum Teil schematisierter Darstellung:
- Fig.l: in schaubildlicher Darstellung einen Halter, an welchem ein Werkzeug oder Werkstück befestigt werden kann, mit Blick schräg von oben auf in den Ecken angeordnete Passflächen und dazwischen angeordnete Passvorsprünge,
- Fig.2: in schaubildlicher Darstellung einen Halter gemäss Fig.l, gegenüber Fig.l umgekehrt dargestellt, und das damit zu verbindende und daran zu befestigende Werkzeug oder Werkstück kurz vor dem Zusammenfügen und Justieren, wobei angedeutet ist, dass ein im Bereich der Passvorsprünge vorgesehener nachgiebiger Bereich durch einen Schlitz und/oder eine Ausnehmung gebildet sein kann,
- Fig.3: eine teilweise im Schnitt gehaltene Seitenansicht der Befestigungsvorrichtung nach dem Zusammenfügen des Werkstückes oder Werkzeuges und des Halters vor einer Berührung der Passflächen, sowie
- Fig.4: eine Seitenansicht mit sich berührenden Passflächen nach dem Anziehen der Befestigungsschraube, wobei die Verformung des nachgiebigen Bereiches der besseren Erkennbarkeit wegen übertrieben dargestellt ist.

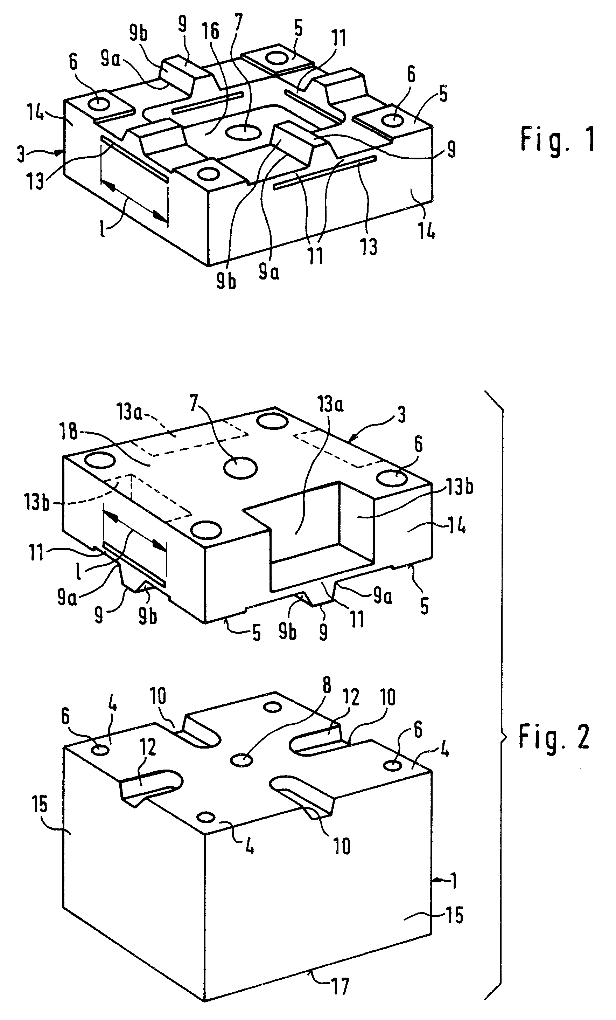

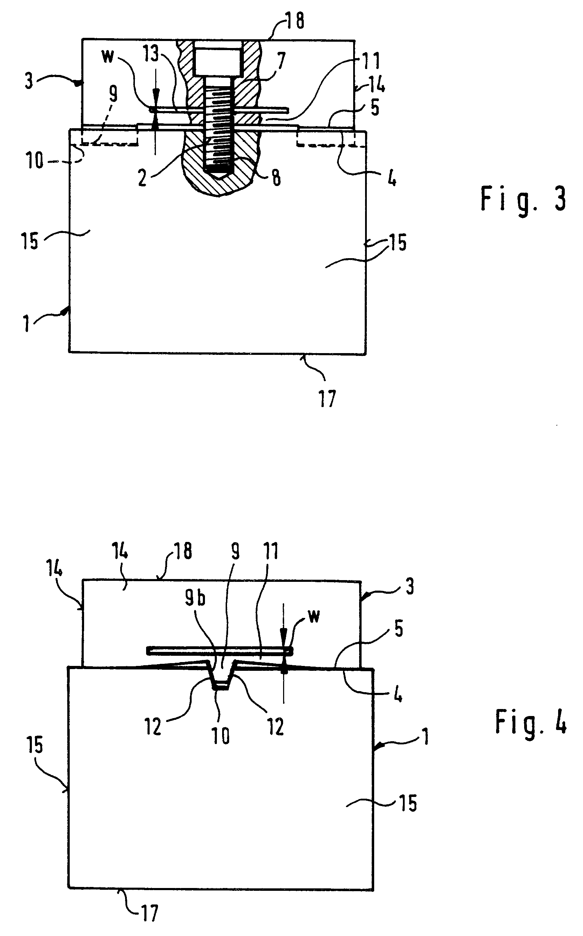

Eine Befestigungsvorrichtung für ein Werkzeug oder Werkstück, im Ausführungsbeispiel eine Elektrode, mit welcher andere Werkstücke bearbeitet werden können, die ihrerseits aber auch zunächst als Werkstück bearbeitet werden muss und ein erstes Teil 1 der Befestigungsvorrichtung darstellt, weist gemäss Fig.3 eine zentrale Spannschraube 2, im folgenden auch einfach Schraube 2 genannt, auf, um das erwähnte erste Teil 1 an einem Halter 3 als zweites Teil, auch Teil 3 genannt, anbringen zu können. Die beiden aneinander zu befestigenden Teile 1 und 3 haben dabei jeweils in Gebrauchsstellung in einer gemeinsamen Ebene aneinander liegende Passflächen 4 und 5, die gemäss Fig.1 und 2 eventuell zusätzliche Schraubenlöcher 6 für eine weitere Befestigung haben können. Normalerweise genügt jedoch die zentrale Schraubenöffnung 7 an dem Halter 3 und die Gewindebohrung 8 an dem Werkstück oder Teil 1, um mit der Schraube 2 eine genügend sichere Befestigung zu erzielen, weil die Passflächen 4 und 5 zu einer genauen gegenseitigen Lage in axialer Richtung und quer bzw. rechtwinklig zu der Schraube 2 führen, wenn sie gegeneinander verspannt sind. Dabei sind an der durch die einander zugewandten Flächen gebildeten Befestigungsstelle zusätzlich zu den die gegenseitige axiale Lage fixierenden Passflächen 4 und 5 Passvorsprünge 9 vorgesehen, die eine Verschiebung der miteinander verbundenen Teile 1 und 3 quer zu den Befestigungsmitteln innerhalb der Berührebene der Passflächen 4 und 5 verhindern und die beiden Teile 1 und 3 auch quer zu dieser Berührebene in X- und Y- Richtung passgenau zentrieren.

Die Passvorsprünge 9 sind zu diesem Zweck an einem der Teile, im Ausführungsbeispiel dem Teil 3, zwischen den Berührflächen 5 angeordnet und das damit zu verbindende andere Teil, im Ausführungsbeispiel Teil 1, hat an entsprechenden Stellen Passaussparungen 10. Die Passvorsprünge 9 und die Passaussparungen 10 greifen beim gegenseitigen Befestigen gemäss den Figuren 3 und 4 teilweise formschlüssig und passgenau ineinander und sorgen für eine gegenseitige Justierung und Zentrierung der beiden Teile 1 und 3.

Dabei zeigt Fig.3 die Anordnung, bei welcher die Passvorsprünge 9 formschlüssig in die Passaussparungen 10 eingreifen. Man erkennt, dass in dieser Position die Passflächen 4 und 5 noch einen Abstand voneinander haben, also sich nicht berühren, so dass eine gegenseitige Verkippung der Teile 1 und 3 möglich wäre.

Damit nun ein stärkeres Anziehen des Befestigungselementes, nämlich der Schraube 2 oder mehrerer Schrauben, dazu führen kann, dass die Justierung und Zentrierung in X- und Y-Richtung erhalten bleibt, trotzdem aber auch in Z-Richtung durch Berührung der Passflächen 4 und 5 hergestellt wird, sind die Passvorsprünge 9 jeweils an einem in axialer Richtung, das heisst in Richtung des Verlaufes der Befestigungsschraube 2, gegen eine Verformungskraft elastisch auslenkbaren oder nachgiebigen Bereich 11 dieses Teiles 3 vorgesehen. Denkbar wäre auch, dass die Passaussparungen 10 zusätzlich oder anstelle der Passvorsprünge 9 an einem solchen nachgiebigen Bereich des sie aufweisenden Teiles 1 angeordnet sind, jedoch ist es meist günstiger, wenn der Passvorsprung 9 in axialer Richtung etwas ausweichen kann, weil er dadurch nicht selbst verformt wird, was bei einer Passaussparung nicht ganz auszuschliessen wäre.

Die Passflächen 4 und 5 haben dabei beim Eingreifen der Passvorsprünge 9 in die Passaussparungen 10, wie es in Fig.3 dargestellt ist, einen Abstand zueinander, der gleich oder kleiner als die Nachgiebigkeit des auslenkbaren Bereiches 11 ist. Dadurch wird sichergestellt, dass beim Anziehen der Schraube 2 im Bereich der schon in axialer Richtung aneinander liegenden Passvorsprünge 9 und Passaussparungen 10 eine so grosse Nachgiebigkeit vorhanden ist, dass auch die Passflächen 4 und 5 in Anlage aneinandergebracht werden können.

Wird also die Schraube 2 in der in Fig.3 dargestellten Position stärker angezogen, wird der nachgiebige Bereich 11 gemäss Fig.4 etwas in axialer Richtung verformt und bei Beibehaltung der Zentrierung und Justierung zwischen den Passvorsprüngen 9 und den Passaussparungen 10 kommen auch die Passflächen 4 und 5 in Anlage aneinander, berühren sich also und sorgen für eine gegenseitige Ausrichtung der Teile 1 und 3, so dass auch die Justierung in Z-Richtung erreicht wird.

Im Ausführungsbeispiel sind die Passvorsprünge 9 im Querschnitt keilförmig, das heisst sie haben einen trapezförmigen Querschnitt, verjüngen sich also von ihrer Basis 9a aus in senkrechter Richtung. Die Passaussparungen 10 haben übereinstimmend mit dieser Form der Passaussparungen 10 schräg angeordnete Gegenflächen 12, die sich in Gebrauchsstellung flächig an die im Querschnitt schräg verlaufenden Flanken 9b der Passvorsprünge 9 anlegen, wie man es deutlich in Fig.4 erkennt. Dies ergibt eine bestmögliche Zentrierung und Justierung in Richtung der Trenn- oder Berührebene zwischen den beiden Teilen 1 und 3, also quer zur Z-Achse bzw. zur Mittelachse und zu der Schraube 2.

Gegebenenfalls könnten die Passvorsprünge 9 auch einen kreisbogenförmigen oder halbkreisförmigen Querschnitt haben, der entweder mit schrägen Gegenflächen 12 oder analog geformten Gegenflächen zusammenwirken kann.

Die Nachgiebigkeit des Bereiches 11 ist dadurch hergestellt, dass jeweils eine in Spannrichtung dem Spannvorsprung 9 benachbarte Ausnehmung 13a oder Höhlung, im Ausführungsbeispiel gemäss Fig.l, 3 und 4 ein parallel zu den Passflächen 5 verlaufender Schlitz 13, vorgesehen ist, der den den jeweiligen Passvorsprung 9 aufweisenden Bereich 11 des Teiles 3 bei ansonsten einstückiger Verbindung von dem übrigen Bereich dieses Teiles 3 trennt. Vor allem Fig.4 verdeutlicht, dass die in Spannrichtung verlaufende Abmessung dieses Schlitzes 13, also die Schlitzweite w, durch den Spannvorgang insbesondere in der Mitte des Schlitzes unmittelbar unter- oder oberhalb des Passvorsprungs 9 elastisch verkleinert wird. Die Ausnehmung 13a, Höhlung bzw. der Schlitz 13 ist also an dem jeweils die Passvorsprünge 9 aufweisenden Teil 3 in Spannrichtung hinter diesen Passvorsprüngen 9 angeordnet. Die seitliche Ausdehnung oder Länge 1 der Schlitze 13 quer zum Verlauf der etwa radial angeordneten Passvorsprünge 9 ist dabei grösser als die Breite der Passvorsprünge 9 an ihrer Basis 9a in dieser Richtung, was deutlich in Fig.l, 2 und 4 erkennbar ist. Dies ergibt einen genügend langen Bereich 11, um ihn beim Verspannen der gesamten Befestigungsvorrichtung mit Hilfe der Schraube 2 unter Verkleinerung der Schlitzweite w elastisch nachgeben zu lassen. Dabei kann die Länge l des Schlitzes 13 oder der Ausnehmung 13a quer zur Erstreckung der Passvorsprünge 9 jeweils etwa dem Dreifachen bis Fünffachen der Breite der Passvorsprünge 9 an ihrer Basis 9a betragen, um eine ausreichende Federwirkung, Elastizität oder Nachgiebigkeit des Bereiches 11 bei trotzdem genügender Festigkeit für die Beibehaltung der Justierung und Zentrierung zu erhalten.

In Fig.2 ist angedeutet, dass anstelle der Schlitze 13 Ausnehmungen 13a vorgesehen sein können, wobei in Fig.2 einerseits ein Schlitz 13 und andererseits eine solche Ausnehmung 13a gezeichnet sind. Es können aber an allen nachgiebigen Bereichen 11 Ausnehmungen 13a vorgesehen sein, wie es gestrichelt angedeutet ist.

Diese Ausnehmungen 13a sind dabei gemäss Fig.2 an der dem Passvorsprung 9 abgewandten Oberseite 18 offen und die seitlichen Begrenzungswände 13b verlaufen parallel zueinander und rechtwinklig zu den Seitenflächen 14 und der Oberseite 18. Im Falle einer Anordnung solcher Aussparungen 13a unterhalb der Passaussparungen 10 könnten diese in analoger Weise bis zu einer entsprechenden Unterseite 17 des Teiles 1 verlaufen.

Denkbar wäre ausserdem, dass an gegenüberliegenden Seiten Schlitze 13 und an den anderen beiden gegenüberliegenden Seiten jeweils Ausnehmungen 13a vorgesehen sind. Es handelt sich dabei praktisch um einen Sonderfall eines Schlitzes, bei welchem die dem nachgiebigen Bereich 11 abgewandte Schlitzbegrenzung praktisch weggelassen ist bzw. entfällt. Dennoch ergibt sich beim Befestigen der beiden Teile 1 und 3 aneinander im wesentlichen eine elastische Verformung des Bereiches 11, wie sie auch in Fig.4 dargestellt ist. Das Teil 3 hat jedoch ein geringeres Gewicht.

Die Passvorsprünge 9 haben gemäss Fig.1 und 2 eine längliche Form und verlaufen von dem Rand bzw. der Seitenfläche 14 des sie aufweisenden Teiles 3 in Richtung zu seiner Mitte hin und enden vor dieser Mitte. Die Passaussparungen 10 sind gemäss Fig.2 in gleicher Weise und Richtung orientiert und im Bereich der Seitenflächen 15 des Teiles 1 randoffen. Dabei sind die Passvorsprünge 9 prismatische Zentrierleisten oder Zentrierleistenstücke, die gemäss Fig.1 gleichmässig am Umfang des Teiles 3 verteilt sind und bei einem im Querschnitt runden Teil radial, bei dem im Ausführungsbeispiel viereckigen oder quadratischen Teil rechtwinklig zu den Seitenflächen 14 und den entsprechenden Rändern verlaufen.

Wenigstens zwei oder jeweils zwei an einander gegenüberliegenden Seitenflächen 15 mündende Passaussparungen 10, die auch im Ausführungsbeispiel miteinander fluchten, was nicht unbedingt der Fall sein muss, könnten auch miteinander zu einer zum Beispiel über die Mitte durchgehenden Passaussparung verbunden sein, deren Endbereiche dann mit den Passvorsprüngen 9 entsprechend zusammenwirken. Dies erlaubt das Anbringen solcher einander gegenüberliegender Passaussparungen in einem einzigen Arbeitsgang.

Dabei sind diese leistenförmigen Passvorsprünge 9 und demgemäss auch die Passvertiefungen 10 auf sich rechtwinklig kreuzenden Linien angeordnet, so dass gegenseitige Wärmebewegungen auch aufgrund der randoffenen Ausgestaltung der Passausnehmungen 10 nicht behindert werden. Solche Wärmebewegungen können auftreten, wenn das Teil 1 als Werkstück zerspanend bearbeitet wird oder wenn es später als Werkzeug als Elektrode eingesetzt wird. Die Anordnung der ebenen Passflächen 4 und 5 sowie der Passvorsprünge 9 und der Passaussparungen 10 zueinander ergeben also zwar eine Justierung in X-, Y- und Z-Richtung sowie sogar in Drehrichtung um die zentrale Mittelachse der gesamten Anordnung, behindern aber trotzdem seitliche Wärmedehnungen und Wärmebewegungen nicht.

Das die Schlitze 13 oder Ausnehmungen 13a zur Bildung des nachgiebigen Bereiches 11 aufweisende Teil 3 hat eine mittig angeordnete Vertiefung 16, in welche die Schlitze 13 oder Ausnehmungen 13a offen münden und die Schlitze 13 oder Ausnehmungen 13a sind auch nach den Seitenflächen 14 hin offen, also insgesamt durchgehend gestaltet, so dass sie die in Fig.4 dargestellte Nachgiebigkeit des Bereiches 11 ermöglichen. Um dabei eine möglichst grosse Justier-und Zentrierfläche zu erhalten, verlaufen die Passvorsprünge 9 über die gesamte von der Aussenseite 14 bis zu der Vertiefung 16 reichende Breite des geschlitzten Bereiches. Die Passvorsprünge 9 haben also eine Länge, die der Gesamtbreite der Schlitze 13 oder Ausnehmungen 13a entspricht. Auch dadurch ergeben sich möglichst gleichmässige Verformungsverhältnisse beim Verspannen der gesamten Befestigungsvorrichtung und beim Aneinanderdrücken der Passflächen 4 und 5.

Es sei noch erwähnt, dass die Dicke des zwischen den Schlitzen 13 oder Ausnehmungen 13a und dem Passvorsprung 9, gegebenenfalls der Passaussparung 10, befindlichen Materials des Bereiches 11 so gross gewählt sein kann, dass eine Verformung in Spannrichtung eine Kraft von wenigstens etwa 200 N pro Passvorsprung 9 erforderlich macht. Dies bedeutet, dass die Passung im Bereich der Passvorsprünge 9 trotz dieser Nachgiebigkeit erhalten bleibt.

Die Befestigung zweier Teile 1 und 3 aneinander, beispielsweise eines Werkzeuges oder Werkstückes an einem Halter, sieht vor, dass die beiden aneinander zu befestigenden Teile 1 und 3 in Gebrauchsstellung aneinander liegende Passflächen 4 und 5 haben und durch quer oder rechtwinklig zu der Berührebene dieser Passflächen 4 und 5 verlaufende Befestigungsmittel, beispielsweise eine einzige Spannschraube 2, gegeneinander verspannt sind. Dabei sind zusätzlich zu den die gegenseitige axiale Lage in Z-Richtung fixierenden Passflächen 4 und 5 Passvorsprünge 9 an dem einen Teil und Passaussparungen 10 an dem anderen Teil vorgesehen, die eine Verschiebung der miteinander verbundenen und verspannten Teile 1 und 3 quer zu den Befestigungsmitteln innerhalb der Berührebene der Passflächen 4 und 5 verhindern und die beiden Teile 1 und 3 quer zu dieser Berührebene in X- und Y-Richtung passgenau zentrieren. Dabei befinden sich die Passvorsprünge 9 und/oder die Passaussparungen 10 an einem in axialer Richtung gegen eine Verformungskraft, die durch die Schraube 2 aufgebracht werden kann, elastisch auslenkbaren oder nachgiebigen Bereich 11 des sie aufweisenden Teiles 1 oder 3, so dass die Passvorsprünge 9 passgenau in die Passaussparungen 10 eingreifen können, bevor sich die Passflächen 4 und 5 berühren. Durch stärkeres Anziehen der Befestigungsmittel kommen dann auch die Passflächen 4 und 5 in gegenseitige Berührung, ohne dass ein zusätzliches Teil für die Justierung oder Zentrierung in X- und Y-Richtung benötigt wird.

## Patentansprüche

1. Befestigungsvorrichtung für ein Werkzeug oder Werkstück als ein erstes Teil (1) an einem Halter (3) als zweites Teil, wobei die beiden aneinander zu befestigenden Teile in Gebrauchsstellung aneinander liegende Passflächen (4,5) haben und durch quer oder rechtwinklig zu der Berührebene dieser Passflächen (4,5) verlaufende Befestigungsmittel gegeneinander verspannt sind, wobei an der Befestigungsstelle zusätzlich zu den die gegenseitige axiale Lage fixierenden Passflächen (4,5) Passvorsprünge (9) vorgesehen sind, die eine Verschiebung der miteinander verbundenen Teile (1,3) quer zu den Befestigungsmitteln bzw. innerhalb der Berührebene der Passflächen (4,5) verhindern und die beiden Teile (1,3) quer zu dieser Berührebene zumindest in X- und Y-Richtung passgenau zentrieren, **dadurch gekennzeichnet,** dass die Passvorsprünge (9) **einstückig an** einem der Teile zwischen den Berührflächen **angeformt** sind, währenddem **direkt in das** damit zu verbindende andere Teil an entsprechenden Stellen Passaussparungen (10) **eingelassen sind,** die beim gegenseitigen Befestigen passgenau formschlüssig ineinandergreifen, und dass die Passvorsprünge (9) an einem in axialer Richtung gegen eine Verformungskraft elastisch auslenkbaren oder nachgiebigen Bereich (11) des sie aufweisenden Teiles vorgesehen sind.

2. Vorrichtung nach Anspruch 1, dadurch gekennzeichnet, dass die Passflächen (4,5) beim Eingreifen der Passvorsprünge (9) in die Passaussparungen (10) einen Abstand zueinander haben, der gleich oder kleiner als die elastische Auslenkung des Bereiches (11) ist.

3. Vorrichtung nach Anspruch 1 oder 2, dadurch gekennzeichnet, dass die Passvorsprünge (9) im Querschnitt keilförmig oder bogen-bzw. kreisbogenförmig oder mit trapezförmigem oder halbkreisförmigem Querschnitt versehen sind und die Passaussparungen (10) übereinstimmend schräg angeordnete Gegenflächen (12) haben.

4. Vorrichtung nach einem der Ansprüche 1 bis 3, dadurch gekennzeichnet, dass eine in Spannrichtung dem Passvorsprung (9) benachbarte Ausnehmung (13a), Höhlung und/oder ein insbesondere parallel zu den Passflächen (5) verlaufender Schlitz (13) vorgesehen ist, der den den Passvorsprung (9) aufweisenden Bereich (11) der Teile (3) von dem übrigen Bereich dieser Teile trennt, und dass die in Spannrichtung verlaufende Abmessung dieser Höhlung, Ausnehmung (13a) oder des Schlitzes (13) durch den Spannvorgang elastisch verkleinerbar ist.

5. Vorrichtung nach einem der Ansprüche 1 bis 4, dadurch gekennzeichnet, dass die Ausnehmung (13a), Höhlung oder Schlitzung (13) an dem die Passvorsprünge (9) aufweisenden Teil (3) in Spannrichtung hinter diesen Passvorsprüngen (9) angeordnet ist.

6. Vorrichtung nach einem der Ansprüche 1 bis 5, dadurch gekennzeichnet, dass die Passvorsprünge eine längliche Form haben und von dem Rand des sie aufweisenden Teiles (3) aus, insbesondere in Richtung zu seiner Mitte hin verlaufen und vor der Mitte enden und dass die Passaussparungen (10) in gleicher Weise orientiert und randoffen sind.

7. Vorrichtung nach einem der Ansprüche 1 bis 6, dadurch gekennzeichnet, dass die Passvorsprünge (9) prismatische Zentrierleisten sind, die gleichmässig am Umfang des Teiles (3) verteilt sind und bei einem im Querschnitt runden Teil radial, bei einem viereckigen Teil rechtwinklig zu den Seitenflächen (14) verlaufen.

8. Vorrichtung nach einem der Ansprüche 1 bis 7, dadurch gekennzeichnet, dass die leistenförmigen Passvorsprünge (9) und die Passvertiefungen (10) auf sich rechtwinklig kreuzenden Linien angeordnet sind.

9. Vorrichtung nach einem der Ansprüche 1 bis 8, dadurch gekennzeichnet, dass das die Ausnehmungen (13a) oder Schlitze (13) zur Bildung des nachgiebigen Bereiches (11) aufweisende Teil (3) eine im wesentlichen mittig angeordnete Vertiefung (16) hat, in welche die Ausnehmungen (13a) oder Schlitze (13) offen münden und dass die Schlitze (13) oder Ausnehmungen (13a) nach den Seitenflächen (14) hin offen münden.

10. Vorrichtung nach einem der Ansprüche 1 bis 9, dadurch gekennzeichnet, dass die Passvorsprünge (9) über die gesamte von der Aussenseite (14) bis zu der Vertiefung (16) reichende Seite des geschlitzten Bereiches verlaufen.

11. Vorrichtung nach einem der Ansprüche 1 bis 10, dadurch gekennzeichnet, dass die seitliche Ausdehnung oder Länge (1) der Schlitzung (13) oder Ausnehmung (13a) quer zum Verlauf der Passvorsprünge (9) grösser als die Breite der Passvorsprünge (9) in dieser Richtung ist.

12. Vorrichtung nach einem der Ansprüche 1 bis 11, dadurch gekennzeichnet, dass die Dicke des zwischen der Schlitzung (13) oder Ausnehmung (13a) und dem Passvorsprung (9) befindlichen Materials des nachgiebigen Bereiches (11) so gross ist, dass eine Verformung in Spannrichtung eine Kraft von wenigstens etwa 200 N pro Passvorsprung (9) erforderlich macht.

13. Vorrichtung nach einem der Ansprüche 1 bis 12, dadurch gekennzeichnet, dass die Länge (1) des Schlitzes (13) oder der Ausnehmung (13a) quer zur Erstreckung der Passvorsprünge (9) etwa das drei- bis fünffache der Breite des Passvorsprunges (9) an seiner Basis (9a) beträgt.

14. Vorrichtung nach einem der Ansprüche 1 bis 13, dadurch gekennzeichnet, dass die Ausnehmungen (13a) an der dem Passvorsprung (9) oder der Passaussparung (10) abgewandten Oberseite (18) oder Unterseite (17) offen ist und ihre seitlichen Begrenzungswände (13b) parallel zueinander und/oder rechtwinklig zu den Seitenflächen (14;15) oder zur Oberseite (18) oder Unterseite (17) verlaufen.

15. Vorrichtung nach einem der vorstehenden Ansprüche, dadurch gekennzeichnet, dass wenigstens zwei an einander gegenüberliegenden Seitenflächen (15) mündende Passaussparungen (10) miteinander fluchten und/oder miteinander zu einer über die Mitte durchgehenden Passaussparung verbunden sind.

## Claims

1. Mounting device for a tool or workpiece as a first part (1) on a holder (3) as the second part, the two parts to be mounted one on the other having mating surfaces (4, 5) lying one against the other in the position of use and being clamped one against the other by mounting means extending transversely or at right angles to the plane of contact of these mating surfaces (4, 5), whereby at the mounting point, in addition to the mating surfaces (4, 5) fixing the mutual axial position, mating projections (9) are provided, which prevent a displacement of the parts (1, 3) connected to each other transversely to the mounting means or within the plane of contact of the mating surfaces (4, 5) and which centre the two parts (1, 3) with an exact fit transversely with respect to this plane of contact at least in the X- and Y-direction, characterised in that the mating projections (9) are integrally formed on one of the parts between the contact surfaces, whereas mating recesses (10) are let directly into the other part to be connected thereto at corresponding points, which engage one in the other in a form-locking manner with an exact fit at the time of mutual mounting, and that the mating projections (9) are provided on a region (11) of the part comprising them, which can be deflected elastically or is resilient in the axial direction against a deforming force.

2. Device according to Claim 1, characterised in that at the time of engagement of the mating projections (9) in the mating recesses (10), the mating surfaces (4, 5) are at a distance apart which is equal to or less than the elastic deflection of the region (11).

3. Device according to Claim 1 or 2, characterised in that the mating projections (9) are wedge-shaped or curved or circular in cross-section or are provided with a trapezoidal or semi-circular cross-section and the mating recesses (10) have counter-surfaces (12) arranged obliquely in a corresponding manner.

4. Device according to one of Claims 1 to 3, characterised in that a recess (13a), cavity and/or a slot (13) extending in particular parallel to the mating surfaces (5), is provided adjacent to the mating projection (9) in the clamping direction, which separates the region (11) of the parts (3) comprising the mating projection (9) from the remaining region of these parts, and that the dimension of this cavity, recess (13a) or slot (13) extending in the clamping direction can be reduced elastically by the clamping operation.

5. Device according to one of Claims 1 to 4, characterised in that the recess (13a), cavity or slot (13) is located on the part (3) comprising the mating projections (9), in the clamping direction behind these mating projections (9).

6. Device according to one of Claims 1 to 5, characterised in that the mating projections have an elongated shape and extend from the edge of the part (3) comprising them, in particular in the direction of its centre and terminate before the centre and that the mating recesses (10) are oriented in the same manner and are open on their edge.

7. Device according to one of Claims 1 to 6, characterised in that the mating projections (9) are prismatic centering strips, which are distributed uniformly on the periphery of the part (3) and in the case of a part having a round cross-section extend radially, and in the case of a square part extend at right angles to the side faces (14).

8. Device according to one of Claims 1 to 7, characterised in that the strip-like mating projections (9) and the mating recesses (10) are located on lines intersecting at right angles.

9. Device according to one of Claims 1 to 8, characterised in that the part (3) comprising the recesses (13a) or slots (13) to form the resilient region (11) has a recess (16) located substantially centrally, into which the recesses (13a) or slots (13) open and that the slots (13) or recesses (13a) open towards the side faces (14).

10. Device according to one of Claims 1 to 9, characterised in that the mating projections (9) run along the entire side of the slotted region extending from the outer side (14) as far as the recess (16).

11. Device according to one of Claims 1 to 10, characterised in that the lateral extent or length (l) of the slot (13) or recess (13a) with respect to the transverse extent of the mating projections (9) is greater than the width of the mating projections (9) in this direction.

12. Device according to one of Claims 1 to 11, characterised in that the thickness of the material of the resilient region (11) located between the slot (13) or recess (13a) and the mating projection (9) is so great that a deformation in the clamping direction necessitates a force of at least approximately 200 N per mating projection (9).

13. Device according to one of Claims 1 to 12, characterised in that the length (l) of the slot (13) or recess (13a) with respect to the transverse extent of the mating projections (9) amounts to approximately three to five times the width of the mating projection (9) at its base (9a).

14. Device according to one of Claims 1 to 13, characterised in that the recesses (13a) are open on the upper side (18) remote from the mating projection (9) or the mating recess (10) or on the under side (17) and their lateral boundary walls (13b) extend parallel to each other and/or at right angles to the side faces (14; 15) or to the upper side (18) or lower side (17).

15. Device according to one of the preceding Claims, characterised in that at least two mating recesses (10) opening out on opposite side faces (15), align with each other and/or are connected to each other as a mating recess continuing across the centre.

## Revendications

1. Dispositif de fixation pour un outil ou une pièce en tant qu'une première pièce (1) sur un support (3) en tant que deuxième pièce, les deux pièces à fixer l'une contre l'autre ayant des surfaces d'ajustage (4,5) juxtaposées en position d'utilisation et étant tendues l'une par rapport à l'autre par des moyens de fixation s'étendant transversalement ou perpendiculairement au plan de contact de ces surfaces d'ajustage (4,5), moyennant quoi il est prévu au point de fixation, en supplément des surfaces d'ajustage (4,5) fixant la position axiale réciproque, des parties saillantes d'ajustage (9) qui empêchent un déport des parties (1,3) reliées entre elles transversalement aux moyens de fixation ou à l'intérieur du plan des surfaces d'ajustage (4,5) et centrent les deux parties (1,3) avec un ajustage précis transversalement à ce plan de contact au moins dans les directions X et Y, caractérisé en ce que les parties saillantes d'ajustage (9) sont formées d'un seul bloc sur l'une des pièces entre les surfaces de contact, tandis que des évidements d'ajustage (10) sont encastrés directement dans l'autre pièce à relier en des endroits appropriés, évidements qui s'engrènent mécaniquement avec un ajustage précis dans le cas de la fixation réciproque, et en ce que les parties saillante d'ajustage (9) sont prévues sur une zone (11), pouvant être déviée de façon élastique dans le sens axial par rapport à une force de déformation ou souple, de la pièce les présentant.

2. Dispositif selon la revendication 1, caractérisé en ce que, lors de l'engrènement des parties saillantes d'ajustage (9) dans les évidements d'ajustage (10), les surfaces d'ajustage ont un espacement qui est égal ou inférieur à la déviation élastique de la zone (11).

3. Dispositif selon la revendication 1 ou 2, caractérisé en ce que les parties saillantes d'ajustage (9) sont en forme de coin ou d'arc ou d'arc de cercle en section transversale ou pourvues d'une section transversale trapézoïdale ou semi-circulaire et les évidements d'ajustage (10) ont des contre-surfaces (12) disposées en biais et coïncidentes.

4. Dispositif selon l'une quelconque des revendications 1 à 3, caractérisé en ce qu'il est prévue une cavité (13a) voisine de la partie saillante d'ajustage (9) dans le sens de serrage, un creux et/ou une fente (13) s'étendant en particulier parallèlement aux surfaces d'ajustage (15), qui sépare la zone (11) des pièces (3) présentant la partie saillante d'ajustage (9) de la zone restante de ces pièces, et en ce que la dimension, allant dans le sens de serrage de ce creux, de cette cavité (13a) ou de la fente (13) peut être réduite de façon élastique par l'opération de serrage.

5. Dispositif selon l'une quelconque des revendications 1 à 4, caractérisé en ce que la cavité (13a), le creux ou la fente (13) est disposé sur la pièce (3) présentant les parties saillantes d'ajustage (9) dans le sens de serrage derrière ces parties saillantes d'ajustage (9).

6. Dispositif selon l'une quelconque des revendications 1 à 5, caractérisé en ce que les parties saillantes d'ajustage ont une forme allongée et s'étendent depuis le bord de la pièce (3) les présentant, en particulièrement en direction de son centre et se terminent avant le milieu et en ce que les évidements d'ajustage (10) sont orientés de la même manière et sont ouverts sur le bord.

7. Dispositif selon l'une quelconque des revendications 1 à 6, caractérisé en ce que les parties saillantes d'ajustage (9) sont des baguettes de centrage prismatiques, qui sont réparties uniformément à la périphérie de la pièce (3) et s'étendent dans le sens radial dans le cas d'une pièce ronde en section et perpendiculairement aux surfaces latérales (14) dans le cas d'une pièce carrée.

8. Dispositif selon l'une quelconque des revendications 1 à 7, caractérisé en ce que les parties saillantes (9) en forme de baguette et les creux d'ajustage (10) sont disposés sur des lignes se croisant perpendiculairement.

9. Dispositif selon l'une quelconque des revendications 1 à 8, caractérisé en ce que la pièce (3) présentant les cavités (13a) ou fentes (13) pour la formation de la zone (11) souple a un creux (16) disposé sensiblement au centre, dans lequel les cavités (13a) ou fentes (13) débouchent de façon ouverte et en ce que les fentes (13) ou cavités (13a) débouchent de façon ouverte en direction des surfaces latérales (14).

10. Dispositif selon l'une quelconque des revendications 1 à 9, caractérisé en ce que les parties saillantes d'ajustage (9) s'étendent sur l'ensemble du côté de la zone fendue qui va du côté extérieur (14) jusqu'au creux (16).

11. Dispositif selon l'une quelconque des revendications 1 à 10, caractérisé en ce que l'extension longitudinale ou la longueur (1) de la fente (13) ou de la cavité (13a) est, transversalement aux parties saillantes d'ajustage (9), supérieure à la largeur des parties saillantes d'ajustage (9) dans cette direction.

12. Dispositif selon l'une quelconque des revendications 1 à 11, caractérisé en ce que l'épaisseur du matériau, se trouvant entre la fente (13) ou la cavité (13a) et la partie saillante d'ajustage (9), de la zone (11) souple est si grande qu'une déformation dans le sens de serrage nécessite une force d'au moins 200 N par partie saillante d'ajustage (9).

13. Dispositif selon l'une quelconque des revendications 1 à 12, caractérisé en ce que la longueur (1) de la fente (13) ou de la cavité (13a) est égale, transversalement à l'étirement des parties saillantes d'ajustage (9), à environ trois à cinq fois la largeur de la partie saillante d'ajustage (9) sur sa base (9a).

14. Dispositif selon l'une quelconque des revendications 1 à 13, caractérisé en ce que les cavités (13a) sont ouvertes sur la face supérieure (18) ou la face inférieure (17) opposée à la partie saillante d'ajustage (9) ou l'évidement d'ajustage (10) et leurs parois de délimitation (13b) latérales sont parallèles entre elles et/ou perpendiculaires aux surfaces latérales (14;15) ou à la face supérieure (18) ou à la face inférieure (17).

15. Dispositif selon l'une quelconque des revendications précédentes, caractérisé en ce qu'au moins deux évidements d'ajustage (10) débouchant sur des surfaces latérales (15) opposées sont alignés entre eux et/ou reliés entre eux en un évidement d'ajustage passant par le centre.
